# FASCICULE DE BREVET EUROPEEN

(11) **EP 3 666 973 B1**
(45) Date de publication et mention de la délivrance du brevet: **27.07.2022**
(21) Numéro de dépôt: 19214272.7
(22) Date de dépôt: 06.12.2019
(51) Int. Cl.: E01C 5/00, E01C 9/00, E01C 11/00, E01C 17/00, H01L 31/048, H02S 20/10, H02S 20/21, H02S 40/36, F24S 20/64, E01F 9/553, G08G 1/00, G08G 1/14, E04H 6/42, F21S 8/02

(54) **DALLE DE RECOUVREMENT DESTINÉE À UN SYSTÈME DE PAVEMENT POUR CHAUSSÉE**
ABDECKPLATTE FÜR STRASSENBELAGSYSTEM
COVERING SLAB INTENDED FOR A PAVEMENT SYSTEM FOR A ROAD

(30) Priorité: 10.12.2018 FR 1872585
(43) Date de publication de la demande: 17.06.2020
(73) Titulaire: Lyon Parc Auto - LPA - Societe pour la Realisation et la Gestion d'Equipements, 69002 Lyon (FR)
(72) Inventeur: BOSSIN, Philippe, 69380 Lissieu (FR); FAVRE, Bernard, 69008 Lyon (FR)
(74) Mandataire: Germain Maureau

(56) Documents cités:
- EP-A2- 1 431 458
- WO-A1-2007/128078
- WO-A1-2018/158598
- US-A- 5 685 666
- US-A1- 2016 301 355
- US-B2- 7 303 800

## Description

### Domaine de l'invention

La présente invention se rapporte à une dalle de recouvrement destinée à un système de pavement pour chaussée.

### Art antérieur

De manière connue, le document US 2016/0301355 A1 décrit un pavé comprenant une surface supérieure, une surface inférieure opposée et une épaisseur séparant la face supérieure de la face inférieure. Le pavé définit ainsi une cavité imperméable. Le pavé comprend un système de fixation permettant de se lier à un pavé adjacent. Ledit système de fixation est également utilisé pour connecter électriquement le pavé à un pavé adjacent.

Toutefois, ces solutions ne donnent pas une entière satisfaction.

En effet, un pavé définissant une cavité imperméable est compliqué à mettre en œuvre.

De plus, le système de fixation ne permet au pavé que de se connecter électriquement aux pavés adjacents.

La présente invention permet de résoudre tout ou partie des inconvénients mentionnés ci-dessus.

### Exposé de l'invention

A cet effet, la présente invention concerne une dalle de recouvrement destinée à un système de pavement pour chaussée , la dalle de recouvrement comprenant :
- un châssis de soutènement configuré pour être positionné en regard de la chaussée;
- un élément de recouvrement adapté pour recouvrir le châssis de soutènement et comprenant une face de circulation ; et
- un dispositif d'assemblage destiné à assembler le châssis de soutènement de la dalle de recouvrement à au moins un autre châssis de soutènement d'au moins une autre dalle de recouvrement, ledit dispositif d'assemblage comprenant au moins un élément de fixation configuré pour adapter la distance entre une face d'appui du dispositif d'assemblage de la dalle de recouvrement sur la chaussée et la face de circulation de l'élément de recouvrement de la dalle de recouvrement.

Selon un mode de réalisation, l'élément de recouvrement comprend au moins un organe de fixation adapté pour fixer au moins un élément de mobilier urbain. Une telle configuration permet à la dalle de recouvrement d'être fixée à au moins un élément de mobilier urbain.

Selon un mode de réalisation, le châssis de soutènement comprend une pluralité d'orifices de passage situés à proximité immédiate des coins du châssis de soutènement, lesdits orifices de passage étant adaptés pour permettre le passage d'éléments d'alimentation.

Selon un mode de réalisation, le dispositif d'assemblage est également adapté pour être fixé à la chaussée.

Selon un mode de réalisation, la face d'appui est une face du dispositif d'assemblage destiné à s'appuyer sur la chaussée.

Selon un mode de réalisation, la face d'appui est une face du châssis de soutènement destiné à s'appuyer sur la chaussée.

La face de circulation de l'élément de recouvrement étant configurée pour former une surface de circulation lorsque la dalle de recouvrement est assemblée à au moins une autre dalle de recouvrement.

Selon un avantage, une surface de circulation est une surface sur laquelle un véhicule peut circuler.

Selon un mode de réalisation, la dalle de recouvrement s'étend sensiblement horizontalement.

Au sens de la présente invention, sensiblement horizontalement signifie horizontalement ou horizontalement à 10% près.

Selon un mode de réalisation, l'élément de recouvrement est plan. Selon un avantage, un élément de recouvrement plan permet de créer une face de circulation plus agréable pour des usagers de ladite face de circulation.

Selon un mode de réalisation, l'élément de recouvrement comprend deux éléments maintien s'étendant selon un axe commun. Le châssis de soutènement comprend deux orifices de maintien adaptés pour recevoir chacun un élément de maintien. Un telle configuration permet d'obtenir un élément de recouvrement fixé de manière amovible au châssis de soutènement.

Selon un mode de réalisation, les éléments d'alimentation sont des câbles d'alimentation tels que des câbles d'alimentation en énergie ou des câbles d'alimentation en données par exemple.

Selon un autre mode de réalisation, les éléments d'alimentation sont des tuyauteries d'alimentation telles que des tuyaux d'alimentation de liquide ou de gaz par exemple.

Selon un avantage, une dalle de recouvrement comprenant une pluralité d'orifices de passage adaptés pour permettre le passage d'éléments d'alimentation permet de faciliter le passage d'un élément d'alimentation.

Au sens de la présente invention, « à proximité immédiate des coins du châssis de soutènement » signifie « sur les coins du châssis de soutènement » ou « sur les coins du châssis de soutènement à 10% de la longueur du châssis de soutènement près ».

Selon un avantage, des orifices de passage situés à proximité immédiate des coins du châssis de soutènement permettent de faciliter le passage d'au moins un élément d'alimentation de la dalle de recouvrement à d'autres dalles de recouvrement.

Une telle configuration, et plus particulièrement au moins un élément de fixation configuré pour adapter la distance entre la chaussée et la face de circulation permet au système de pavement de former une face de circulation sensiblement à niveau malgré l'inclinaison et / ou les aspérités de la chaussée.

Selon un mode de réalisation, le châssis de soutènement comprend des orifices de réception adaptés pour recevoir chacun un élément de fixation.

Selon un avantage, un châssis de soutènement comprenant des orifices réception adaptés pour recevoir un élément de fixation permet de faciliter la fixation de la dalle de recouvrement avec ledit élément de fixation. Faciliter la fixation de la dalle de recouvrement avec un élément de fixation permet de fixer plus facilement la dalle de recouvrement avec au moins une autre dalle de recouvrement.

Selon un mode de réalisation, les orifices réception adaptés pour recevoir un élément de fixation sont des orifices de réception oblongs.

Selon un avantage, des orifices de réception oblongs permettent de faciliter la fixation de la dalle de recouvrement à un élément de fixation.

Selon un mode de réalisation, les orifices de réception oblongs s'étendent à proximité immédiate des coins du châssis de soutènement. Avantageusement, une telle configuration permet une bonne réception des éléments de fixation.

Selon un mode de réalisation, le châssis de soutènement est sensiblement rectangulaire.

Au sens de la présente invention, sensiblement rectangulaire signifie rectangulaire ou rectangulaire à 5% près.

Selon un avantage, un châssis de soutènement rectangulaire permet de faciliter la fixation de la dalle de recouvrement avec au moins une autre dalle de recouvrement.

Selon un mode de réalisation, le châssis de soutènement présente trois angles à 90° et deux angles à 45° de manière à maintenir un accès à la chaussée.

Selon un mode de réalisation, la dalle de recouvrement comprend une rampe d'accès adaptée pour faciliter l'accès d'un véhicule à la face de circulation.

Selon un avantage, une dalle de recouvrement comprenant une rampe d'accès permet de faciliter l'accès d'un véhicule tel qu'un fauteuil roulant par exemple à la face de circulation.

Selon un mode de réalisation, la rampe d'accès comprend une structure de soutènement fixée à une surface extérieure du châssis de soutènement.

Selon un avantage, une telle configuration permet d'assurer un bon positionnement de la rampe d'accès.

Selon un mode de réalisation, la rampe d'accès comprend un organe de recouvrement adapté pour recouvrir la structure de soutènement.

Selon un mode de réalisation, l'organe de recouvrement comprend une face d'accès.

La face d'accès de l'organe de recouvrement étant configurée pour former une surface d'accès lorsque la dalle de recouvrement est assemblée à au moins une autre dalle de recouvrement.

Selon un avantage, une surface d'accès est une surface sur laquelle un véhicule peut circuler.

Selon un mode de réalisation, la structure de soutènement comprend des orifices de liaison adaptés pour lier une face de l'organe de recouvrement disposée en regard de la structure de soutènement à ladite structure de soutènement.

Selon un avantage, une structure de soutènement comprenant des orifices de liaison adaptés pour lier une face du moyen de recouvrement disposée en regard de la structure à ladite structure permet de lier le moyen de recouvrement à la structure de soutènement par l'intérieur.

Selon un avantage, une telle configuration permet d'améliorer la sécurité et la solidité de la dalle de recouvrement.

Selon un mode de réalisation, l'élément de recouvrement comprend un boîtier d'intégration fixé à la face de l'élément de recouvrement disposée en regard de la chaussée.

Selon un avantage, un élément de recouvrement comprenant un boîtier d'intégration permet d'intégrer plus facilement au moins un équipement à la dalle de recouvrement.

Selon un mode de réalisation, le boîtier d'intégration comprend au moins un orifice de connexion adapté pour permettre le passage d'éléments d'alimentation.

Selon un avantage, un boîtier d'intégration comprenant au moins un d'orifice de connexion adapté pour permettre le passage d'éléments d'alimentation permet de faciliter le passage d'un élément d'alimentation.

Selon un mode de réalisation, le boîtier d'intégration est un boîtier étanche.

Au sens de la présente invention, un boîtier étanche signifie un boîtier répondant à un standard tel que IP 68 par exemple.

Au sens de la présente invention, un boîtier étanche signifie un boîtier répondant à un standard tel que IP 54 par exemple.

Au sens de la présente invention, un boîtier étanche signifie un boîtier répondant à un standard tel que IP 55 par exemple.

Selon un avantage, un élément de recouvrement comprenant un boîtier étanche permet une bonne protection.

L'invention concerne également un système de pavement pour chaussée configuré pour former une surface de circulation sensiblement plane, ledit système de pavement comprenant :
- une pluralité de dalles de recouvrement distinctes les unes des autres et assemblées entre elles, lesdites dalles de recouvrement comprenant chacune :
   ∘ un châssis de soutènement configuré pour être positionné sur la chaussée ;
   ∘ un élément de recouvrement adapté pour recouvrir le châssis de soutènement et comprenant une face de circulation, les faces de circulation des éléments de recouvrement étant configurées pour former la surface de circulation lorsque les dalles de recouvrement sont assemblées entre elles ; et
- une pluralité de dispositifs d'assemblage configurés pour assembler la pluralité de dalles de recouvrement.

Au sens de la présente invention, sensiblement plane signifie plane ou plane à 5° près.

Selon un avantage, un système de pavement pour chaussée configuré pour former une surface de circulation comprenant une pluralité de dalles permet de faciliter la manutention et la mise en œuvre d'un tel système de pavement.

Selon un avantage, un châssis de soutènement adapté pour soutenir au moins une partie du poids d'un véhicule permet au système de pavement de supporter la circulation de véhicules routiers.

Selon un mode de réalisation, le châssis de soutènement est adapté pour soutenir un poids entre 2,5 tonnes et 3,5 tonnes. Avantageusement, une telle configuration permet à un châssis de soutènement de supporter la force appliquée par une roue d'un véhicule routier pesant un total de 19 tonnes et ayant 2 essieux pour un total de 6 roues.

Selon un avantage, une pluralité d'éléments d'assemblage configurés pour assembler la pluralité de dalles de recouvrement permet d'obtenir un système de pavement résistant.

Selon un mode de réalisation, chaque dispositif d'assemblage est configuré pour relier de deux à quatre châssis de soutènement.

Bien évidemment, les éléments décrits précédemment concernant la dalle de recouvrement sont susceptibles de s'appliquer au système de pavement comprenant une pluralité de dalles de recouvrement.

Selon un mode de réalisation, chacun des dispositifs d'assemblage comprend un élément de support comprenant une pluralité d'orifices de fixation traversant de part en part l'élément de support dans son épaisseur, et une pluralité d'éléments de fixation, chaque orifice de fixation étant adapté pour supporter un élément de fixation.

Selon un mode de réalisation, l'élément de support est une platine de support.

Au sens de la présente invention, l'épaisseur est la dimension mesurée par l'écart entre les deux faces d'un objet ayant les plus grandes surfaces.

Selon un avantage, un élément de support comprenant une pluralité d'orifices de fixation traversant de part en part l'élément de support dans son épaisseur, lesdits orifices de fixation étant adaptés pour supporter un système vis-écrou permet de faciliter la mise en œuvre du système de pavement.

Selon un mode de réalisation, l'élément de fixation est un système vis-écrou.

Selon un avantage, une telle configuration permet de faciliter la mise en œuvre du système de pavement.

Selon un mode de réalisation, la pluralité d'éléments d'assemblage est adaptée pour lier ledit système de pavement à la chaussée.

Selon un mode de réalisation, chaque élément d'assemblage est adapté pour fixer au sol les châssis de soutènement, l'élément de fixation étant reçu dans les orifices de réception desdits châssis de soutènement.

Selon un avantage, un système de pavement comprenant une pluralité d'éléments de support adaptés pour lier ledit système de pavement à la chaussée permet de faciliter la mise en œuvre du système de pavement.

Selon un mode de réalisation, au moins deux systèmes vis-écrou appartenant à la pluralité de systèmes vis-écrou sont de longueurs différentes.

Au sens de la présente invention, le système vis-écrou s'étendant longitudinalement, la longueur est la dimension suivant la direction d'extension.

Selon un avantage, des systèmes vis-écrou dont les longueurs sont différentes les uns par rapport aux autres permettent au système de pavement de former une surface de circulation sensiblement plane malgré l'inclinaison et / ou les aspérités de la chaussée.

Selon un mode de réalisation, au moins un système vis écrou comprend au moins une rondelle percée en son centre. Une telle disposition permet de limiter le desserrage dudit système vis-écrou. Une telle disposition permet également au système de pavement de former une surface de circulation sensiblement plane malgré l'inclinaison et / ou les aspérités de la chaussée.

Les différents aspects définis ci-dessus non incompatibles peuvent être combinés.

### Brève description des figures

L'invention sera encore mieux comprise à l'aide de la description détaillée qui est exposée ci-dessous en regard des dessins annexés dans lesquels :
[Fig. 1] représente une dalle de recouvrement conformément à la présente invention ;
[Fig. 2] représente un dispositif d'assemblage fixé à un châssis de soutènement conformément à la présente invention ;
[Fig. 3] représente un dispositif d'assemblage fixé à des châssis de soutènement conformément à la présente invention ;
[Fig. 4] représente un des châssis de soutènement conformément à la présente invention ;
[Fig. 5] représente un châssis de soutènement et une structure de soutènement conformément à la présente invention ;
[Fig. 6] représente un système de pavement conformément à la présente invention ; et
[Fig. 7] représente un système de pavement disposé sur la chaussée conformément à la présente invention.

### Description en référence aux figures

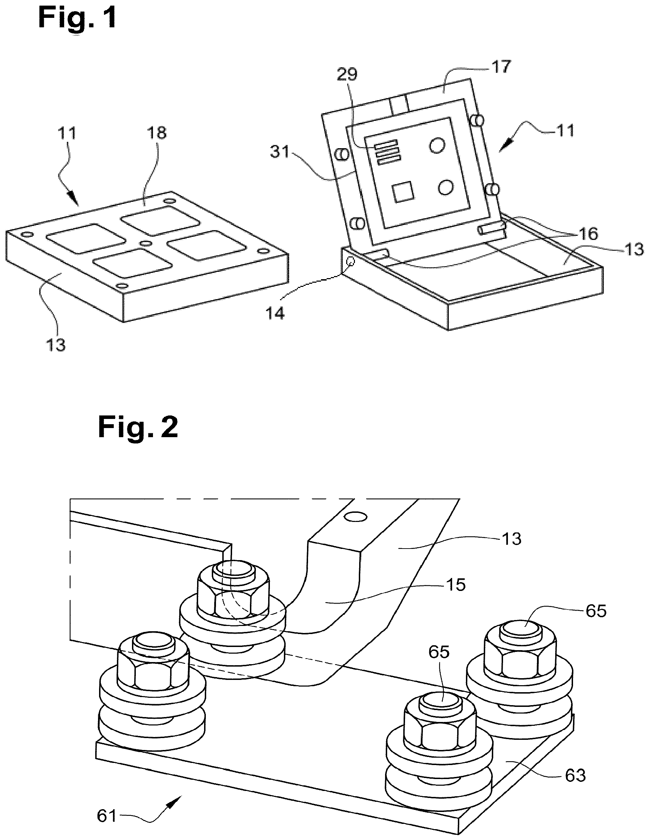

La [Fig. 1] décrit une dalle de recouvrement 11 s'étendant sensiblement horizontalement et étant destinée à un système de pavement pour chaussée 101.

La dalle de recouvrement 11 comprend un châssis de soutènement 13 sensiblement rectangulaire configuré pour être positionné sur la chaussée 101 et adapté pour soutenir au moins une partie du poids d'un véhicule routier.

Selon un mode de réalisation, le châssis de soutènement 13 est adapté pour soutenir un poids entre 2,5 tonnes et 3,5 tonnes. Avantageusement, une telle configuration permet à un châssis de soutènement 13 de supporter la force appliquée par une roue d'un véhicule routier pesant un total de 19 tonnes et ayant 2 essieux pour un total de 6 roues.

Le châssis de soutènement 13 comprend une pluralité d'orifices de passage 15 situés à proximité immédiate des coins du châssis de soutènement 13, lesdits orifices de passage 15 étant adaptés pour permettre le passage d'éléments d'alimentation. Les éléments d'alimentation sont des câbles d'alimentation tels que des câbles d'alimentation en énergie ou des câbles d'alimentation en données par exemple. Une telle configuration, permet de faciliter le passage d'un élément d'alimentation.

Le châssis de soutènement 13 comprend deux orifices de maintien 14 adaptés pour recevoir chacun un élément de maintien 16.

Le châssis de soutènement 13 comprend des orifices de réception 19 oblongs s'étendant à proximité immédiate des coins du châssis de soutènement. Les orifices de réception 19 sont adaptés pour recevoir chacun un élément de fixation 65. Une telle configuration permet de faciliter la fixation de la dalle de recouvrement 11 avec ledit élément de fixation 65.

La dalle de recouvrement 11 comprend également un élément de recouvrement 17 adapté pour recouvrir le châssis de soutènement 13 et comprenant une face de circulation 18.

Selon un avantage, l'élément de recouvrement 17 est plan. Une telle disposition permet de créer une face de circulation 18 plus agréable pour des usagers de ladite face de circulation.

Avantageusement, l'élément de recouvrement 17 comprend deux éléments de maintien 16 s'étendant selon un axe commun. Les éléments de maintien 16 sont insérés dans les orifices de maintien 14, une telle configuration permet d'obtenir un élément de recouvrement 17 fixé de manière amovible au châssis de soutènement 13.

L'élément de recouvrement 17 comprend un boîtier d'intégration 29 étanche fixé à la face de l'élément de recouvrement 17 disposée en regard de la chaussée 101. Avantageusement, une telle configuration permet d'intégrer plus facilement au moins un équipement à la dalle de recouvrement 11 tout en protégeant ledit au moins un équipement.

Avantageusement, l'élément de recouvrement 17 comprend au moins un organe de fixation adapté pour fixer au moins un élément de mobilier urbain. Une telle configuration permet à la dalle de recouvrement 11 d'être fixée à au moins un élément de mobilier urbain.

La dalle de recouvrement 11 comprend un dispositif d'assemblage 61 destiné à assembler le châssis de soutènement 13 de la dalle de recouvrement 11 à au moins un autre châssis de soutènement 13 d'au moins une autre dalle de recouvrement 11, ledit dispositif d'assemblage 61 comprenant au moins un élément de fixation 65 configuré pour adapter la distance entre une face d'appui de la dalle de recouvrement 11 sur la chaussée 101 et la face de circulation 18.

Selon un mode de réalisation, la face d'appui est une face du dispositif d'assemblage 61 destiné à s'appuyer sur la chaussée 101.

Selon un mode de réalisation, le dispositif d'assemblage 61 est également adapté pour être fixé à la chaussée 101.

Selon un mode de réalisation, la face d'appui est une face du châssis de soutènement 13 destiné à s'appuyer sur la chaussée 101.

Une telle configuration, et plus particulièrement au moins un élément de fixation 65 configuré pour adapter la distance entre la chaussée et la face de circulation 18 permet au système de pavement de former une face de circulation sensiblement à niveau malgré l'inclinaison et / ou les aspérités de la chaussée.

Le boîtier d'intégration 29 comprend un orifice de connexion 31 adapté pour permettre le passage d'éléments d'alimentation. Selon un avantage, une telle configuration permet de faciliter le passage d'un élément d'alimentation.

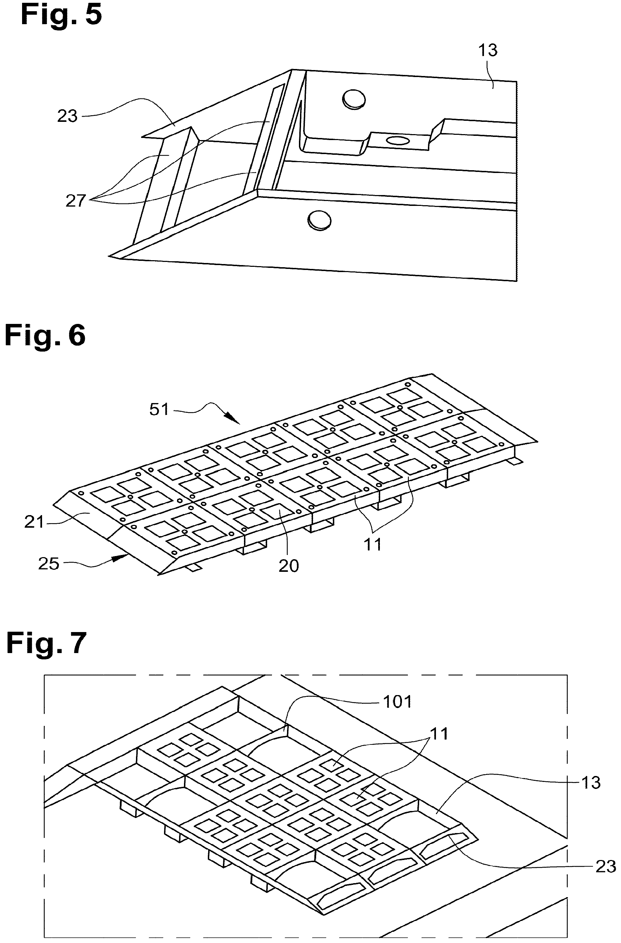

Comme décrit dans les [Fig. 5] et [Fig. 6], la dalle de recouvrement 17 comprend également une rampe d'accès 21 adaptée pour faciliter l'accès d'un véhicule à la face de circulation 18. Une telle configuration permet de faciliter l'accès d'un véhicule tel qu'un fauteuil roulant par exemple à la face de circulation 18.

La rampe d'accès 21 comprend une structure de soutènement 23 fixée à une surface extérieure du châssis de soutènement 13. Selon un avantage, une telle configuration permet d'assurer un bon positionnement de la rampe d'accès 21.

La rampe d'accès 21 comprend également un organe de recouvrement 25 adapté pour recouvrir la structure de soutènement 23 et comprenant une face d'accès sur laquelle un véhicule peut circuler.

La structure de soutènement comprend des orifices de liaison 27 adaptés pour lier une face de l'organe de recouvrement 25 disposée en regard de la structure de soutènement 23 à ladite structure de soutènement 23. Avantageusement, une telle configuration permet de lier le moyen de recouvrement 25 à la structure de soutènement 23 par l'intérieur de cette dernière et ainsi améliorer la sécurité et la solidité de la dalle de recouvrement.

Comme décrit sur les [Fig. 6] et [Fig. 7], l'invention concerne également un système de pavement 51 pour chaussée 101 configuré pour former une surface de circulation 20 sensiblement plane.

Ledit système de pavement 51 comprend une pluralité de dalles de recouvrement 11 distinctes les unes des autres et assemblées entre elles.

Selon un mode de réalisation, la surface de circulation 20 est formé par un ensemble de faces de circulation 18 obtenues lorsque plusieurs dalles de recouvrement 11 sont assemblées.

Au sens de la présente invention, une surface de circulation 20 est une surface sur laquelle un véhicule peut circuler.

Avantageusement, une telle configuration permet de faciliter la manutention et la mise en œuvre d'un tel système de pavement 51.

Avantageusement, un châssis de soutènement 13 rectangulaire permet de faciliter la fixation de la dalle de recouvrement 11 avec au moins une autre dalle de recouvrement 11.

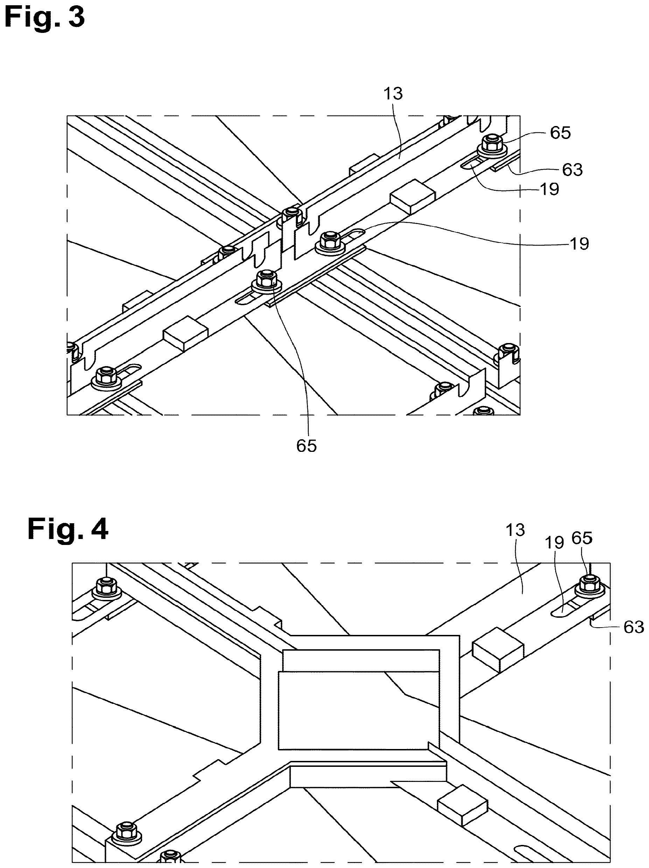

Comme décrit sur les [Fig. 2] et [Fig. 3], le système de pavement 51 comprend également une pluralité de dispositifs d'assemblage 61 configurés pour assembler la pluralité de dalles de recouvrement 11. Chaque dispositif d'assemblage 61 étant configuré pour assembler de deux à quatre châssis de soutènement. Selon un avantage, une telle configuration permet d'obtenir un système de pavement résistant.

Faciliter la fixation de la dalle de recouvrement 11 avec un élément de fixation 65 permet de fixer plus facilement la dalle de recouvrement 11 avec au moins une autre dalle de recouvrement 11.

Chacun des dispositifs d'assemblage 61 comprend un élément de support 63 tel qu'une platine comprenant une pluralité d'orifices de fixation traversant de part en part l'élément de support dans son épaisseur.

Chacun des dispositifs d'assemblage 61 comprend également quatre d'éléments de fixation 65 tels que des systèmes vis-écrou, chaque orifice de fixation étant adapté pour supporter un élément de fixation 65.

Avantageusement, une telle configuration et en particulier les éléments de fixation 65 tels que des systèmes vis-écrou permet de faciliter la mise en œuvre du système de pavement 51.

La pluralité d'éléments d'assemblage 61 est adaptée pour lier ledit système de pavement à la chaussée 101.

Selon un mode de réalisation, chaque dispositif d'assemblage 61 est adapté pour fixer à la chaussée 101 les châssis de soutènement 13, les éléments de fixation 65 étant reçus dans les orifices de réception 19 des châssis de soutènement 13. Selon un avantage, une telle configuration permet de faciliter la mise en œuvre du système de pavement 51.

Selon un avantage, les systèmes vis-écrou ont des longueurs différentes, une telle configuration permet de former une surface de circulation sensiblement plane malgré l'inclinaison et/ ou les aspérités de la chaussée 101.

Selon un mode de réalisation, au moins un système vis écrou comprend au moins une rondelle percée en son centre. Une telle disposition permet de limiter le desserrage dudit système vis-écrou. Une telle disposition permet également au système de pavement de former une surface de circulation sensiblement plane malgré l'inclinaison et / ou les aspérités de la chaussée.

Le système de pavement 51 pour chaussée 101 est également configuré pour former une surface d'accès.

Selon un mode de réalisation, la surface d'accès est formée par un ensemble de faces d'accès obtenues lorsque plusieurs dalles de recouvrement 11 sont assemblées.

Comme décrit sur la [Fig. 4], selon un mode de réalisation, le châssis de soutènement 13 présente trois angles à 90° et deux angles à 45° de manière à maintenir un accès à la chaussée.

Selon un mode de réalisation, le châssis de soutènement 13 est de forme sensiblement hexagonale.

Bien entendu, l'invention n'est pas limitée aux modes de réalisation représentés et décrits ci-avant, mais en couvre au contraire toutes les variantes.

## Revendications

1. Dalle de recouvrement (11) destinée à un système de pavement pour chaussée (101), la dalle de recouvrement (11) comprenant :
un châssis de soutènement (13) configuré pour être positionné en regard de la chaussée (101);
un élément de recouvrement (17) adapté pour recouvrir le châssis de soutènement (13) et comprenant une face de circulation (18) ; et
un dispositif d'assemblage (61) destiné à assembler le châssis de soutènement (13) de la dalle de recouvrement (11) à au moins un autre châssis de soutènement (13) d'au moins une autre dalle de recouvrement (11), ledit dispositif d'assemblage (61) comprenant au moins un élément de fixation (65), **caractérisé en ce que** l'au moins un élément de fixation (65) est configuré pour adapter la distance entre une face d'appui du dispositif d'assemblage (61) de la dalle de recouvrement (11) sur la chaussée (101) et la face de circulation (18) de l'élément de recouvrement (17) de la dalle de recouvrement (11).

2. Dalle de recouvrement (11) selon la revendication 1, dans laquelle le châssis de soutènement (13) comprend des orifices de réception (19) adaptés pour recevoir chacun un élément de fixation (65).

3. Dalle de recouvrement (11) selon l'une quelconque des revendications 1 ou 2, dans laquelle le châssis de soutènement (13) est sensiblement rectangulaire.

4. Dalle de recouvrement (11) selon l'une quelconque des revendications 1 à 3, dans laquelle la dalle de recouvrement (11) comprend une rampe d'accès (21) adaptée pour faciliter l'accès d'un véhicule à la face de circulation (18).

5. Dalle de recouvrement (11) selon la revendication 4, dans laquelle la rampe d'accès (21) comprend une structure de soutènement (23) fixée à une surface extérieure du châssis de soutènement (13).

6. Dalle de recouvrement (11) selon l'une quelconque des revendications 4 ou 5, dans laquelle la rampe d'accès (21) comprend un organe de recouvrement (25) adapté pour recouvrir la structure de soutènement (23).

7. Dalle de recouvrement (11) selon la revendication 6, dans laquelle la structure de soutènement (23) comprend des orifices de liaison (27) adaptés pour lier une face de l'organe de recouvrement (25) disposée en regard de la structure de soutènement (23) à ladite structure de soutènement (23).

8. Dalle de recouvrement (11) selon l'une quelconque des revendications 1 à 7, dans laquelle l'élément de recouvrement (17) comprend un boîtier d'intégration (29) fixé à la face de l'élément de recouvrement (17) disposée en regard de la chaussée (101).

9. Dalle de recouvrement (11) selon la revendication 8, dans laquelle le boîtier d'intégration (29) comprend au moins un orifice de connexion (31) adapté pour permettre le passage d'éléments d'alimentation.

10. Dalle de recouvrement (11) selon l'une quelconque des revendication 8 ou 9, dans laquelle le boîtier d'intégration (29) est un boîtier étanche.

11. Système de pavement (51) pour chaussée (101) configuré pour former une surface de circulation (20) sensiblement plane, ledit système de pavement comprenant :
une pluralité de dalles de recouvrement (11) distinctes les unes des autres et assemblées entre elles, lesdites dalles de recouvrement (11) selon l'une quelconque des revendications 1 à 10 comprenant chacune :
un châssis de soutènement (13) configuré pour être positionné sur la chaussée (101) ; un élément de recouvrement (17) adapté pour recouvrir le châssis de soutènement (13) et comprenant une face de circulation (18), les faces de circulation des éléments de recouvrement étant configurées pour former la surface de circulation (20) lorsque les dalles de recouvrement (11) sont assemblées entre elles ; et
une pluralité de dispositifs d'assemblage (61) configurés pour assembler la pluralité de dalles de recouvrement (11).

12. Système de pavement (51) selon la revendication 11, dans lequel chacun des dispositifs d'assemblage (61) comprend un élément de support (63) comprenant une pluralité d'orifices de fixation traversant de part en part l'élément de support dans son épaisseur, et une pluralité d'éléments de fixation (65), chaque orifice de fixation étant adapté pour supporter un élément de fixation (65).

13. Système de pavement (51) selon la revendication 12, dans lequel l'élément de fixation (65) est un système vis-écrou.

14. Système de pavement (51) selon l'une quelconque des revendications 11 à 13, dans lequel la pluralité d'éléments d'assemblage (61) est adaptée pour lier ledit système de pavement à la chaussée (101).

15. Système de pavement (51) selon l'une quelconque des revendications 12 à 14, dans lequel au moins deux systèmes vis-écrou appartenant à la pluralité de systèmes vis-écrou sont de longueurs différentes.

## Patentansprüche

1. Bodenplatte zur Abdeckung (11), vorgesehen für ein Fahrbahnbelagsystem (101), wobei die Bodenplatte zur Abdeckung (11) umfasst:
einen Stützrahmen (13), konfiguriert, um der Fahrbahn (101) zugewandt positioniert zu werden;
ein Abdeckelement (17), angepasst, um den Stützrahmen (13) abzudecken und eine Verkehrsseite (18) umfassend; und
eine Verbindungsvorrichtung (61), vorgesehen, um den Stützrahmen (13) der Bodenplatte zur Abdeckung (11) mit mindestens einem weiteren Stützrahmen (13) von mindestens einer weiteren Bodenplatte zur Abdeckung (11) zu verbinden, wobei die Verbindungsvorrichtung (61) mindestens ein Befestigungselement (65) umfasst, **dadurch gekennzeichnet, dass** das mindestens eine Befestigungselement (65) konfiguriert ist, um den Abstand zwischen einer Auflageseite der Verbindungsvorrichtung (61) der Bodenplatte zur Abdeckung (11) auf der Fahrbahn (101) und der Verkehrsseite (18) des Abdeckelements (17) der Bodenplatte zur Abdeckung (11) anzupassen.

2. Bodenplatte zur Abdeckung (11) nach Anspruch 1, wobei der Stützrahmen (13) Aufnahmeöffnungen (19) umfasst, angepasst, um jeweils ein Befestigungselement (65) aufzunehmen.

3. Bodenplatte zur Abdeckung (11) nach einem der Ansprüche 1 oder 2, wobei der Stützrahmen (13) im Wesentlichen rechteckig ist.

4. Bodenplatte zur Abdeckung (11) nach einem der Ansprüche 1 bis 3, wobei die Bodenplatte zur Abdeckung (11) eine Auffahrtsrampe (21) umfasst, angepasst, um die Auffahrt eines Fahrzeugs zur Verkehrsseite (18) zu erleichtern.

5. Bodenplatte zur Abdeckung (11) nach Anspruch 4, wobei die Auffahrtsrampe (21) eine Stützstruktur (23) umfasst, die an einer Außenfläche des Stützrahmens (13) befestigt ist.

6. Bodenplatte zur Abdeckung (11) nach einem der Ansprüche 4 oder 5, wobei die Auffahrtsrampe (21) ein Abdeckteil (25) umfasst, angepasst, um die Stützstruktur (23) abzudecken.

7. Bodenplatte zur Abdeckung (11) nach Anspruch 6, wobei die Stützstruktur (23) Anschlussöffnungen (27) umfasst, angepasst, um eine Seite des Abdeckteils (25), die der Stützstruktur (23) zugewandt angeordnet ist, mit dieser Stützstruktur (23) zu vereinen.

8. Bodenplatte zur Abdeckung (11) nach einem der Ansprüche 1 bis 7, wobei das Abdeckelement (17) ein Aufnahmegehäuse (29) umfasst, das an der Seite des Abdeckelements (17) befestigt ist, die der Fahrbahn (101) zugewandt angeordnet ist.

9. Bodenplatte zur Abdeckung (11) nach Anspruch 8, wobei das Aufnahmegehäuse (29) mindestens eine Verbindungsöffnung (31) umfasst, angepasst, um die Durchführung von Zuleitungselementen zu ermöglichen.

10. Bodenplatte zur Abdeckung (11) nach einem der Ansprüche 8 oder 9, wobei das Aufnahmegehäuse (29) ein wasserdichtes Gehäuse ist.

11. Belagsystem (51) für Fahrbahn (101), konfiguriert, um eine im Wesentlichen ebene Verkehrsfläche (20) zu bilden, wobei das Belagsystem umfasst:
eine Vielzahl von voneinander gesonderten und miteinander verbundenen Bodenplatten zur Abdeckung (11), wobei die Bodenplatten zur Abdeckung (11) nach einem der Ansprüche 1 bis 10 jeweils umfassen:
einen Stützrahmen (13), konfiguriert, um auf der Fahrbahn (101) positioniert zu werden;
ein Abdeckelement (17), angepasst, um den Stützrahmen (13) abzudecken und eine Verkehrsseite (18) umfassend, wobei die Verkehrsseiten der Abdeckelemente konfiguriert sind, um die Verkehrsfläche (20) zu bilden, wenn die Bodenplatten zur Abdeckung (11) miteinander verbunden sind, und
eine Vielzahl von Verbindungsvorrichtungen (61), konfiguriert, um die Vielzahl von Bodenplatten zur Abdeckung (11) zu verbinden.

12. Belagsystem (51) nach Anspruch 11, wobei jede der Verbindungsvorrichtungen (61) ein Tragelement (63) umfasst, eine Vielzahl von Befestigungsöffnungen umfassend, die das Tragelement in seiner gesamten Stärke durchdringen, und eine Vielzahl von Befestigungselementen (65), wobei jede Befestigungsöffnung angepasst ist, um ein Befestigungselement (65) zu tragen.

13. Belagsystem (51) nach Anspruch 12, wobei das Befestigungselement (65) ein Schrauben-Mutter-System ist.

14. Belagsystem (51) nach einem der Ansprüche 11 bis 13, wobei die Vielzahl von Verbindungselementen (61) angepasst ist, um das Belagsystem mit der Fahrbahn (101) zu vereinen.

15. Belagsystem (51) nach einem der Ansprüche 12 bis 14, wobei mindestens zwei Schrauben-Mutter-Systeme, die zu der Vielzahl von Schrauben-Mutter-Systemen gehören, unterschiedliche Längen haben.

## Claims

1. A covering slab (11) intended for a pavement system for a pavement (101), the covering slab (11) comprising:
a support frame (13) configured to be positioned on the pavement (101);
a covering element (17) adapted to cover the support frame (13) and comprising a traffic face (18); and
an assembly device (61) intended to assemble the support frame (13) of the covering slab (11) to at least one other support frame (13) of at least one other covering slab (11), said assembly device (61) comprising at least one fastening element (65), **characterized in that** the at least one fastening element (65) is configured to adapt the distance between a bearing face of the assembly device (61) of the covering slab (11) on the pavement (101) and the traffic face (18) of the covering element (17) of the covering slab (11).

2. The covering slab (11) according to claim 1, wherein the support frame (13) comprises receiving orifices (19) each adapted to receive a fastening element (65).

3. The covering slab (11) according to any one of claims 1 or 2, wherein the support frame (13) is substantially rectangular.

4. The covering slab (11) according to any one of claims 1 to 3, wherein the covering slab (11) comprises an access ramp (21) adapted to facilitate access of a vehicle to the traffic face (18).

5. The covering slab (11) according to claim 4, wherein the access ramp (21) comprises a support structure (23) fastened to an external surface of the support frame (13).

6. The covering slab (11) according to any one of claims 4 or 5, wherein the access ramp (21) comprises a covering member (25) adapted to cover the support structure (23).

7. The covering slab (11) according to claim 6, wherein the support structure (23) comprises linkage orifices (27) adapted to link a face of the covering member (25) disposed opposite the support structure (23) to said support structure (23).

8. The covering slab (11) according to any one of claims 1 to 7, wherein the covering element (17) comprises an integration box (29) fastened to the face of the covering element (17) disposed opposite the pavement (101).

9. The covering slab (11) according to claim 8, wherein the integration box (29) comprises at least one connection orifice (31) adapted to allow the passage of power supply elements.

10. The covering slab (11) according to any one of claims 8 or 9, wherein the integration box (29) is a sealed box.

11. A pavement system (51) for a pavement (101) configured to form a substantially planar traffic surface (20), said pavement system comprising:
a plurality of covering slabs (11) distinct from each other and assembled together, said covering slabs (11) according to any one of claims 1 to 10 each comprising:
a support frame (13) configured to be positioned on the pavement (101);
a covering element (17) adapted to cover the support frame (13) and comprising a traffic face (18), the traffic faces of the covering elements being configured to form the traffic surface (20) when the covering slabs (11) are assembled together; and
a plurality of assembly devices (61) configured to assemble the plurality of covering slabs (11).

12. The pavement system (51) according to claim 11, wherein each of the assembly devices (61) comprises a holding element (63) comprising a plurality of fastening orifices passing throughout the holding element across its thickness, and a plurality of fastening elements (65), each fastening orifice being adapted to hold a fastening element (65).

13. The pavement system (51) according to claim 12, wherein the fastening element (65) is a screw-nut system.

14. The pavement system (51) according to any one of claims 11 to 13, wherein the plurality of assembly elements (61) is adapted to link said pavement system to the pavement (101).

15. The pavement system (51) according to any one of claims 12 to 14, wherein at least two screw-nut systems belonging to the plurality of screw-nut systems have different lengths.
